# EUROPEAN PATENT SPECIFICATION

(11) **EP 1 272 915 B1**
(45) Date of publication and mention of the grant of the patent: **16.07.2008**
(21) Application number: 01927905.8
(22) Date of filing: 10.04.2001
(51) Int. Cl.: G06F 21/00

(54) **DEVICE FOR SECURELY STORING SECRET INFORMATION**
VORRICHTUNG ZUM SICHEREN SPEICHERN GEHEIMER INFORMATIONEN
DISPOSITIF DE STOCKAGE SECURISE D'INFORMATIONS SECRETES

(30) Priority: 11.04.2000 EP 00401007
(43) Date of publication of application: 08.01.2003
(73) Proprietor: Thomson Licensing, 92100 Boulogne-Billancourt (FR)
(72) Inventor: DIEHL, Eric, F-92648 Boulogne (FR); FISCHER, Pierre, F-92648 Boulogne (FR)
(74) Representative: Berthier, Karine
(86) International application number: PCT/EP2001/004088
(87) International publication number: WO 2001/077790

(56) References cited:
- EP-A- 0 843 449
- WO-A-98/42098
- US-A- 5 337 357

## Description

### Field of the invention

The invention relates generally to secure storage of secret information and more particularly to a system and a process for securely storing secret information and to an apparatus and a server to be used in said system. The invention also relates to a method for distribution of a digital content.

### Background art

With the advent of digital TV, and copy protection, the access to content will be protected by rights. These rights may have many forms like entitlements, or dedicated decryption keys. The notion of rights might be extended to any secret information. All these type of data have in common that they need to be stored in a safe place.

Today none of the consumer devices has such tamper proof place. The price would be prohibitive. Only smart cards offer sufficient security. Unfortunately the size of memory of smart cards, and thus their storage capability, is limited. Furthermore a smart card can break down, or be lost. So today, once the user mislays his secret data, he will have no simple way to retrieve them. If these data represent user's rights acquired on digital content (for example the right to view a film or to listen to music) it may be prejudicial to the user if he loses these rights he has paid for.

An example of digital product distribution method is disclosed in document WO 98 42098 A1. In this method, a digital product is encrypted and some fragments of the encrypted product are withheld before distribution of the product. When a customer wishes to access to the product, he uses a reader system to purchase a license upon communication with a license server and the missing fragments and decryption key are provided to the reader system by the license server. But this document fails to disclose how to store securely the decryption key and missing fragments in the reader system.

### Summary of the invention

The present invention is therefore directed to the problem of finding a way of safely and securely storing secret data to be used by a single device or by a device in a network. Another problem to be solved by the invention is to find a way of retrieving these secret data if the device or the network has lost them.

The invention relates to a system for securely storing secret information to be used by a device wherein said secret information is stored in a remote server. The device may be part of a home network and preferably the secret information is used by said device to access to a digital content.

Therefore, the remote server acts as a bank which maintains in a safe place digital secrets.

The invention proposes a device according to independent claim 1.

According to particular embodiments of the invention:
- the device further comprises means for sending a secret information to the remote server in order to store said secret information in said remote server, said secret information being provided to the device by a secret provider;
- the device further comprises means for encrypting the secret information using a secret key of said device before sending said secret information to the remote server;
- each identifier is unique for each secret information item stored in the remote server and is delivered to said device by the remote server.

The invention also proposes a system for securely storing secret information comprising a device as disclosed above; and a server, remote from said device, having a tamper-proof memory space to store said secret information, wherein the secret information is provided to the remote server by a secret provider and wherein each identifier, stored in the memory space of the device, is created by the remote server and is unique for each secret information item stored in the remote server, said identifier being sent to said device by the secret provider.

### Brief description of the drawings

Fig. 1 illustrates the general architecture of a system according to the invention.
Fig. 2 illustrates the architecture of a device used in the system of Fig. 1.
Fig. 3 illustrates a process for storing secret information according to a first embodiment of the invention.
Fig. 4 illustrates a process for retrieving a secret information stored according to the process illustrated in Fig. 3.
Fig. 5 illustrates a second embodiment of the invention.
Fig. 6 illustrates a process for storing a secret information in the second embodiment of the invention.

### Description of the preferred embodiments

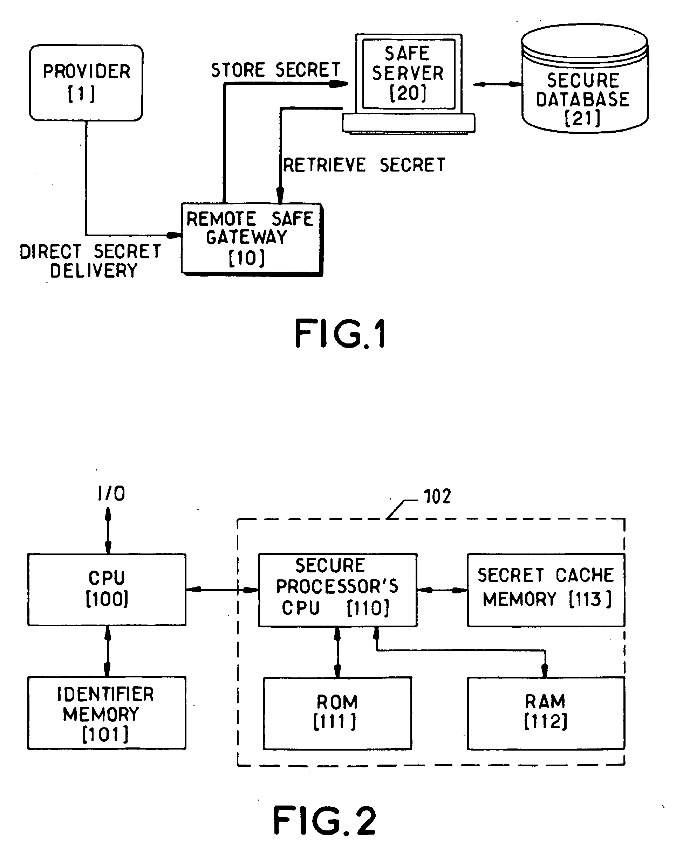

In Fig. 1, we have illustrated a first embodiment of a system according to the invention. In this embodiment, the user has a Set Top Box device 10 (STB) with a return channel such as a PSTN (for "Public Switched Telephone Network") modem or a cable modem.

We assume that all the information to store securely can be carried to this STB. For instance, we can envisage that a complete home network can benefit from the remote safe facility. In this case, preferably, a unique device of the network will be able to store and retrieve secret information according to the invention. This unique dedicated STB is used as an apparatus called the remote safe gateway. Obviously it could be another type of device, for example a computer.

Through its return channel, each remote safe gateway interacts with a remote server 20 called the remote safe server. The remote server has direct access to its own secure database 21. The secure database will store safely and securely the secret information.

In a preferred embodiment of the system, the secure database will be duplicated at least once in different locations. This will avoid loss of data due to natural or malicious crashes. Nevertheless, only one occurrence of the secure database will be considered in the following in order to simplify the presentation of the invention.

The user receives his secrets from a secret provider 1 which is consider here as having generated the secret information. It may be for example a content provider which provides, with an encrypted content, a secret to decrypt this content.

The secret provider 1 provides the information directly to the remote safe gateway 10. The user may receive information from many secret providers.

The characteristics of the system are as follows :
- A user must be identified uniquely. It must not be possible to impersonate him.
- A user must be able to transfer the secret digital information stored in his home system to the safe server 20. No information must leak from this transfer. For that purpose, the remote safe gateway 10 is used to make this transfer.
- The user must be able to retrieve one, part, or all the information stored in his remote safe. No information must leak from this transaction. For that purpose, the remote safe gateway 10 is also used for this transaction.
- There must be no constraint on the format of the stored information.

We will now describe how the system is working.

A first stage of the process consists in the registration of the user. Prior to use the remote safe, the user must sign on the remote safe server's operator. For that purpose, he provides a set of personal information. The definition of these data depends on the operator and is out of the scope of this invention. In return the operator returns a set of secret user identity information (SIᵤₛₑᵣ) used in the next stages. Among this set of information is the unique identifier (IDᵤₛₑᵣ) that thoroughly defines a given user.

The channel used for this communication can be different from the return channel of the remote safe gateway. In any case the transfer of the secret user identity information (SIᵤₛₑᵣ) needs to be secured. There are several possible ways: mailing of a smart card, encrypted information sent through the return channel, ... In the last case, the decryption key is transferred through a secure separate channel such as phone or post mail.

A second stage of the process consists in the storage of secret information in the safe. This requires several steps.

In a first step, the remote safe gateway authenticates the remote safe server using known authentication methods. If the authentication fails, then the storage operation fails.

In a second step, the remote safe server authenticates the remote safe gateway. If the authentication fails, then the storage operation fails.

In a third step, they define a common session key Kₛₑₛₛᵢₒₙ. This means a remote communication is initiated between the remote safe server and the remote safe gateway.

Then, in a fourth step, the remote safe server creates a unique identifier, InfID_{user_i} for the information i to be stored. InfIDuser_i is unique for each information stored by the user. Its choice is fully under the control of the remote safe server. It can be either a "random" number, or a number dedicated to the user, following a given rule *f*, so that *f(InfID_{user_i,} IDᵤₛₑᵣ)*=*true*.

In a fifth step, the remote safe gateway sends the information i to store to the remote safe server. The information i is encrypted using the session key Ksession before being sent. In an optional step, the remote safe gateway encrypts the information i using a secret key of the remote safe gateway before using the session key. Thus, with this optional step, the remote safe server will not have access to the plain text information.

Then, in the last step, the remote safe server decrypts the received information using the session key Ksession and stores it into its secure database.
The transfer may be secured against transmission errors, or message tampering. In that case, the remote safe server checks the integrity of the decrypted message before its eventual storage.

A third stage of the process consists in the retrieval of the secret information from the remote safe server. This operation requires the following steps.

In a first step, the remote safe server authenticates the remote safe gateway. If the authentication fails, then the retrieval operation fails.

In a second step, they define a common session key Ksession.

Then, in a third step, the remote safe gateway provides the remote safe server with the unique identifier of the information to retrieve InfIDuser_i.

In a fourth step, the remote safe server checks the validity of InfIDuser_i. It checks if the corresponding information exists in the database and if this is the case, the remote safe server sends back the requested information to the requesting remote safe gateway in a fifth step. The information is encrypted using the session key Ksession before being sent to the remote safe gateway.

Then, in a last step, the remote safe gateway decrypts the received message using the session key Ksession.

Preferably, the transfer is secured against transmission errors, or message tampering. In that case, the remote safe gateway checks the integrity of the decrypted message before using it.

According to one preferred aspect of the invention, all the operations, except the registration phase, should be transparent to the user. In other words, the retrieval of the stored secrets should be automatic and should not request any interaction from the user.

Fig. 2 illustrates a possible architecture for the remote safe gateway. In this figure, only the elements which are necessary for the understanding of the invention have been represented.

The remote safe gateway has a Central Processing Unit (CPU) 100. It is assumed that the CPU has its own volatile memory and non-volatile memory where its program is stored. In addition, the remote safe gateway has a non-volatile memory space 101 called the identifiers' memory. The CPU 100 can read and write the content of this space.

The remote safe gateway has also a secure processor 102. This secure processor is a tamper proof device that has at least a dedicated CPU 110, a non volatile memory 111 (ROM - Read Only Memory) to store program and persistent data, a volatile memory 112 (RAM - Random Access Memory), and a dedicated non-volatile memory area 113, called the secret cache memory. The secure processor 102 is, in a preferred embodiment, a smart card.

The CPU 100 never handles actual secrets. It handles only information identifiers InfIDuser_i. It maintains a list of the secret information through a list of their corresponding InfIDuser_i. This list is stored in the identifiers' memory. This space needs not to be tamper-proofed. Therefore it is not costly. The size of the identifiers' memory should be chosen to be large enough to store the expected amount of information identifiers.

The secure processor's CPU 110 handles the actual secrets. It stores them in its secret cache memory 113. Unfortunately this space is limited in size due to cost. Therefore it will employ memory-caching techniques that optimize the use of the space. It will store the most recently used secrets and some of the most frequently used secrets.

If the remote safe gateway needs a secret information which is not readily available in the secret cache memory 113, then the secure processor's CPU 110 requests it to the remote safe server.

In one embodiment of the invention, the remote safe gateway is part of a digital home network where other devices are connected. Some of these devices can also handle secrets. In that case they may reproduce the architecture of Fig. 2. Nevertheless, only the remote safe gateway is able to communicate with the remote safe server. The other devices exchange, through secure communication, with the remote safe gateway their secrets to store or to retrieve.

We will now enter into more details of this first embodiment.

### Registration of the user.

When signing on, the user receives the secret user identity information as follows:
- A unique identifier IDuser.
- A pair of public (PUBᵤₛₑᵣ) and private (PRIᵤₛₑᵣ) keys; the remote safe server encrypts with a public key cryptosystem that we will call CS1. RSA (Rivest-Shamir-Adleman public key cryptosystem) could be such a system.
- A public key certificate CERTᵤₛₑᵣ signed by the remote safe server using its private signature key PRI_{safe_sign}. The remote safe server signs with a public key cryptosystem that we will call CS2. RSA could be such a system. CS2 can be identical to CS1.
- The public key of the remote safe server PUB_{safe_enc} using cryptosystem CS1.

These data must be transferred safely to the user. It is especially important that his private key, PRI_{user,} is kept secret. He may for example receive these data in a smart card sent to him via mail.

### Storage of the secret information.

The format of the message to store is preferably defined as follows:

```
          Info_To_Store = {
               InfIDuser_i
               Length_clear_text
               Clear_Text
               Length_secret
               for I=0 to Length_secret-1
                    Secret_data[i]
               Checksum
          }
```

where :
- InfIDuser_i is a unique identifier of the information stored by the user. This identifier is unique to the user and delivered by the safe server;
- Clear_Text is an ASCII text that describes the stored secret information. Its content is user defined. It could be envisaged that the secret provider delivers a default value for this secret ;
- Length_clear_text defines the length in bytes of Clear_Text ;
- Secret_data is the secret to store in the remote safe ;
- Length_secret defines the length in bytes of Secret_data ;
- Checksum is the sum of all previous bytes of the packet.

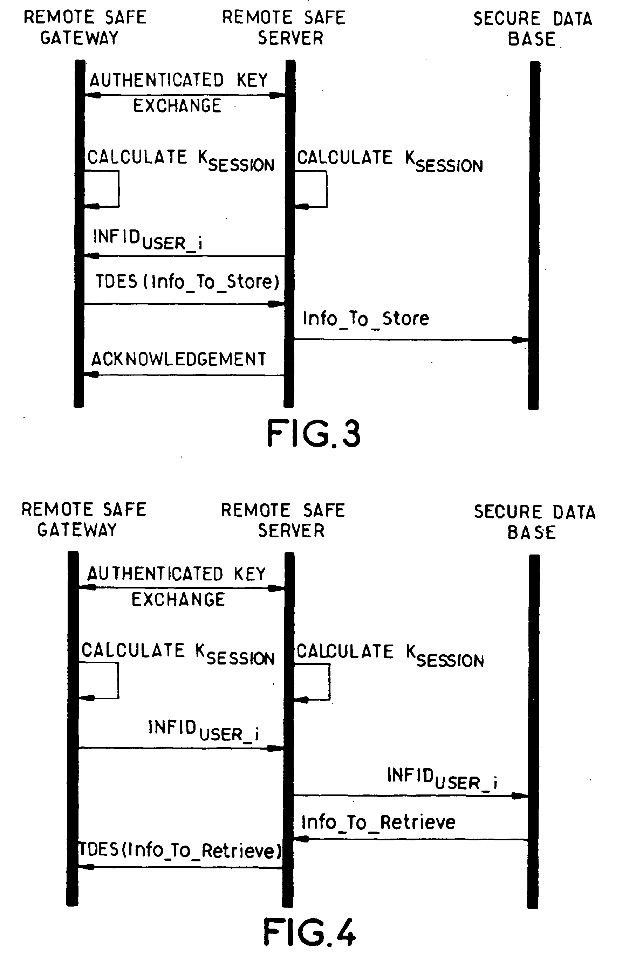

The process for storing a secret information is illustrated in Fig. 3 and explained in the following.

The mutual authentication and key exchange uses the Authenticated DIFFIE HELLMAN Key Exchange Protocol. The protocol generates a common key K_{com}.

The common session key Ksession is the set of the 112 lower bits of the hash of K_{com} through the Secure Hash Algorithm (SHA-1).

The remote safe server defines a new value for the information identifier, InfIDuser_i. It sends it to the remote safe gateway.

The remote safe gateway builds the message Info_To_Store with its secret data and InfIDuser_i. It encrypts it with the Triple DES algorithm using the common session key Ksession It sends the encrypted message to the remote safe server that decrypts it using the common key Ksession.

The remote safe server checks the validity of Checksum. If the received message is valid, the remote safe server sends it to the secure database. If the operation was successful, the remote safe server returns an acknowledgement to the remote safe gateway, else it returns a non-acknowledgement.

### Retrieving the secret information.

The process for retrieving a secret information stored in the remote safe server is illustrated by Fig. 4 and will be explained in the following.

The mutual authentication and key exchange uses the Authenticated DIFFIE HELLMAN Key Exchange Protocol. The protocol generates a common key K_{com}.

The common session key Ksession is the set of the 112 lower bits of the hash of K_{com} through the Secure Hash Algorithm (SHA-1).

The remote safe gateway sends the reference of the data to retrieve: InfIDuser_i.

On receipt of the information identifier InfIDuser_i, the remote safe server passes it to the secure database.

The secure database checks if the message exists, i.e., if there is an information, own by the user, that has the right identification. If it is the case, then it returns the requested information Info_To_Retrieve to the remote safe server. The remote safe server encrypts the received data using Triple DES with the session key Ksession and It sends the encrypted message to the remote safe gateway.

The remote safe gateway decrypts the received message using the session key Ksession. It checks the validity of Checksum and if it is valid, the remote safe gateway uses the retrieved secret information Info_To_Retrieve.

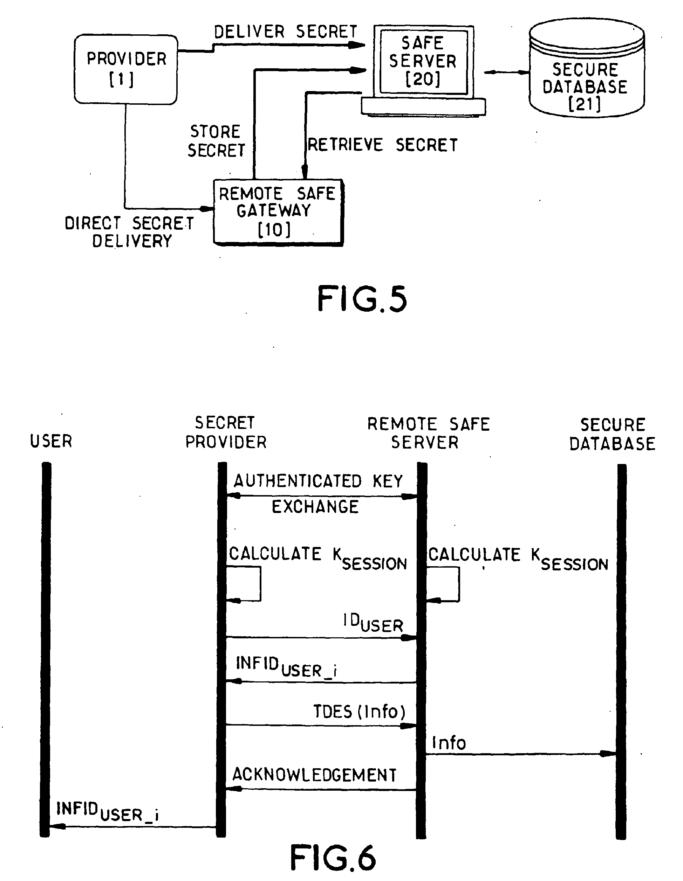

We will now describe a second embodiment of the invention which is illustrated in Fig. 5.

In this embodiment, the secret provider can provide the information directly to the remote safe gateway or by an indirect way using the remote safe server. The user may receive information from many secret providers.

The additional characteristics of the system are as follows:
- A third party, known as the secret provider, can deposit a secret to the remote safe server on behalf of a user. No information must leak from this transaction.
- It is not possible to impersonate a secret provider.
- Once a secret as been deposited by a secret provider, the secret provider has no possible access to it.
- A secret provider cannot retrieve any information stored on the account of a user.
- Only an authorized secret provider can deposit a secret onto the account of a user.

In this embodiment, the process for the secret provider has two stages :

The first stage consists in the registration of the secret provider. As for the remote safe gateway, the secret provider needs to sign on the remote safe server. He signs on as secret provider. In return, it receives a set of information known as secret provider identity information (SIₚᵣₒᵥ).

The second stage consists in the storage of a secret information on behalf of a user. This stage requires several steps.

In a first step, the secret provider, through an apparatus of a local network of its own, authenticates the remote safe server. If the authentication fails, then the storage operation fails.

In a second step, the remote safe server authenticates the secret provider. If the authentication fails, then the storage operation fails.

In a third step, the remote safe server and the secret provider's apparatus define a common session key Kₛₑₛₛᵢₒₙ.

Then, in a fourth step, the secret provider provides the identity of the user that he is acting for: IDᵤₛₑᵣ.

In a fifth step, the remote safe server creates a unique identifier, InfIDuser_i for the information to be stored. InfIDuser_i is unique for each information stored by the user identified by IDuser. Its choice is fully under the control of the remote safe server. It can be either a "random" number, or a number dedicated to the user, following a given rule.

In a sixth step, the secret provider sends the information to store to the remote safe server. The sent information is encrypted using the session key Kₛₑₛₛᵢₒₙ.

In a last step, the remote safe server decrypts the received information using the session key Kₛₑₛₛᵢₒₙ and stores it into its secure database. The transfer may be secured against transmission errors, or message tampering using known techniques. In that case, the remote safe server checks the integrity of the decrypted message before its eventual storage.

Once the operation was successfully ended, then the secret provider sends the information identifier InfIDuser_i to the corresponding remote safe gateway. The secret provider does not keep any copy of it. Therefore, it is impossible for the secret provider to access any more to the secret information to retrieve it or to modify it.

### Details of this second embodiment are explained bellow:

### Registration of the secret provider

When signing on, the secret provider receives the following secret provider identity information:
- A unique identifier IDₚᵣₒᵥ.
- A pair of public (PUBₚᵣₒᵥ) and private (PRIₚᵣₒᵥ) keys; the remote safe server encrypts with the public key cryptosystem CS1.
- A public key certificate CERTₚᵣₒᵥ signed by the remote safe server using its private signature key PRI_{safe_sign_2}; the safe server signs with the public key cryptosystem CS2.
- The public key of the remote safe server PUB_{safe_enc}.

These information must be transferred safely to the secret provider. It is especially important that his private key is kept secret

### Storage of an information on behalf of a user.

This process, which is illustrated in Fig. 6, is similar to the process described previously in view of Fig. 3. The main differences are:
- Prior to exchange the secret information, the secret provider has to identify the user to whom is it depositing. The identification uses the user's unique identifier IDuser.
- Once the secret provider successfully stored the information, it sends the reference of the information to the user, that is to its remote safe gateway.

The system if the invention may be applied to a new distribution model. For example, a content provider wants to distribute in a controlled manner a content. This content can be any digital content such as video, MP3 files, software, etc. For that purpose it distributes the content encrypted with an encryption key K_{enc_cont_i}. To read this encrypted content, the user must have access to the decryption key K_{dec_cont_i}. The decryption key may be equal to the encryption if we use a symmetric cryptosystem. The user contacts the content provider and buys the right to access the content. Acting as a secret provider, the content provider deposits the decryption key in the user's remote safe. In return the user receives the information identifier of the decryption key.

Another possible application of the system of the invention is a small footprint backup of a jukebox. The jukebox will be a future new type of consumer device. It will probably be successful. Nevertheless with the jukebox, a major risk is introduced: loss of all the contents stored in the jukebox. Currently it is envisaged to use hard disks as storage units. In the field of software, it is well known that regular backup of the hard disk is a safe practice. But it is not reasonable to expect the same feature in a consumer device.

The system of the invention will provide a backup facility based on the remote safe as a new service. For each legally delivered content, the content provider will provide an additional information called a digital purchase proof. The digital purchase proof is the result of a one way cryptographic function using as input parameter a unique identifier of the owned content, and the user identifier IDᵤₛₑᵣ. Instead of backing up all his contents, the user stores in his remote safe all his digital purchase proofs. If he loses one content, the user returns to the content provider the corresponding digital proof. The content provider checks if the digital proof is consistent with the claimed content and the identity of the user. If it is the case, then the content provider sends back to the user a copy of the content.

In conclusion, the invention offers the following advantages:
- the possibility to handle in a safe and secure manner a large quantity of secret data without requesting an in-house large tamper-proof space;
- a simple new model of distribution of digital content that could fit for IP streaming, or even prerecorded contents;
- a small size backup of large library of digital contents.

## Claims

1. Device intended to use secret information to access to a digital content; said device containing:
- a memory space (101) for storing a list of identifiers (InfIDuser_i) of secret information items, said secret information items being stored in a tamper-proof memory space (21) of a server (20) remote from said device;
- a secure processor (102) containing a non-volatile memory area (113) for storing secret information items; and
- means for retrieving a secret information from said remote server (20) using an identifier of said list when said secret information is not available in the non-volatile memory area (113) of said secure processor.

2. Device according to claim 1, further comprising means for sending a secret information to said remote server (20) in order to store said secret information in said remote server, wherein said secret information is provided to said device by a secret provider (1).

3. Device according to claim 2, further comprising means for encrypting said secret information using a secret key of said device before sending said secret information to said remote server.

4. Device according to any one of claims 1 to 3, wherein each identifier (InfIDuser_i) is unique for each secret information item stored in the remote server and is delivered to said device by the remote server.

5. Device according to any one of the preceding claims, wherein the secret information is a content decryption key.

6. Device according to any one of claims 1 to 4, wherein the secret information is a purchase proof.

7. System for securely storing secret information comprising:
- a device according to claim 1; and
- a server (20), remote from said device, having a tamper-proof memory space (21) to store said secret information, wherein said secret information is provided to said remote server by a secret provider (1) and
wherein each identifier (InfIDuser_i), stored in the memory space (101) of said device, is created by the remote server and is unique for each secret information item stored in the remote server, said identifier (InfIDuser_i) being sent to said device by the secret provider.

## Patentansprüche

1. Vorrichtung, die für die Verwendung geheimer Informationen zum Zugreifen auf einen digitalen Inhalt vorgesehen ist; wobei die Vorrichtung enthält:
- einen Speicherraum (101) zum Speichern einer Liste von Kennungen (InflDuser_i) geheimer Informationselemente, wobei die geheimen Informationselemente entfernt von der Vorrichtung in einem gegen unbefugte Eingriffe geschützten Speicherraum (21) eines Servers (20) gespeichert sind;
- einen sicheren Prozessor (102), der einen nichtflüchtigen Speicherbereich (113) zum Speichern geheimer Informationselemente enthält; und
- Mittel zum Wiedergewinnen einer geheimen Information von dem entfernten Server (20) unter Verwendung einer Kennung von der Liste, wenn die geheime Information nicht in dem nichtflüchtigen Speicherbereich (113) des sicheren Prozessors verfügbar ist.

2. Vorrichtung nach Anspruch 1, die ferner Mittel umfasst, um eine geheime Information an den entfernten Server (20) zu senden, um die geheime Information in dem entfernten Server zu speichern, wobei die geheime Information durch einen Anbieter (1) von Geheimnisse an die Vorrichtung geliefert wird.

3. Vorrichtung nach Anspruch 2, die ferner Mittel zum Verschlüsseln der geheimen Information unter Verwendung eines geheimen Schlüssels der Vorrichtung vor dem Senden der geheimen Information an den entfernten Server umfasst.

4. Vorrichtung nach einem der Ansprüche 1 bis 3, bei der jede Kennung (InflDuser_i) für jedes in dem entfernten Server gespeicherte geheime Informationselement eindeutig ist und durch den entfernten Server an die Vorrichtung geliefert wird.

5. Vorrichtung nach einem vorangehenden Anspruch, bei der die geheime Information ein Inhaltsentschlüsselungsschlüssel ist.

6. Vorrichtung nach einem der Ansprüche 1 bis 4, bei der die gemeine Information ein Kaufbeleg ist.

7. System zum sicheren Speichern geheimer Informationen, wobei das System umfasst:
- eine Vorrichtung nach Anspruch 1; und
- einen Server (20), der entfernt von der Vorrichtung ist und einen gegen unbefugte Eingriffe geschützten Speicherraum (21) zum Speichern der geheimen Information aufweist, wobei die geheime Information durch einen Anbieter (1) von Geheimnisse an den entfernten Server geliefert wird, und
wobei jede in dem Speicherraum (101) der Vorrichtung gespeicherte Kennung (InflDuser_i) durch den entfernten Server erzeugt wird und für jedes in dem entfernten Server gespeicherte geheime Informationselement eindeutig ist, wobei die Kennung (InflDuser_i) durch den Anbieter von Geheimnisse an die Vorrichtung gesendet wird.

## Revendications

1. Dispositif destiné à utiliser des informations secrètes pour accéder à un contenu numérique ; ledit dispositif contenant :
- un espace mémoire (101) permettant de stocker une liste d'identifiants (InflDuser_i) d'éléments d'informations secrètes, lesdits éléments d'informations secrètes étant stockés dans un espace mémoire inviolable (21) d'un serveur (20) distant dudit dispositif ;
- un processeur sécurisé (102) contenant une zone de mémoire non volatile (113) permettant de stocker des éléments d'informations secrètes ; et
- un moyen permettant de récupérer une information secrète dudit serveur distant (20) à l'aide d'un identifiant de ladite liste lorsque ladite information secrète n'est pas disponible dans la zone de mémoire non volatile (113) dudit processeur sécurisé.

2. Dispositif selon la revendication 1, comprenant en outre un moyen permettant d'envoyer une information secrète audit serveur distant (20) afin de stocker ladite information secrète dans ledit serveur distant, où ladite information secrète est fournie audit dispositif par un fournisseur de secrets (1).

3. Dispositif selon la revendication 2, comprenant en outre un moyen permettant de chiffrer ladite information secrète à l'aide d'une clé secrète dudit dispositif avant d'envoyer ladite information secrète audit serveur distant.

4. Dispositif selon l'une quelconque des revendications 1 à 3, où chaque identifiant (InflDuser_i) est unique pour chaque élément d'informations secrètes stocké dans le serveur distant et est fourni audit dispositif par le serveur distant.

5. Dispositif selon l'une quelconque des revendications précédentes, où l'information secrète est une clé de déchiffrement de contenu.

6. Dispositif selon l'une quelconque des revendications 1 à 4, où l'information secrète est une preuve d'achat.

7. Système permettant de stocker de façon sécurisée des informations secrètes, comprenant :
- un dispositif selon la revendication 1 ; et
- un serveur (20), distant dudit dispositif, possédant un espace mémoire inviolable (21) pour stocker lesdites informations secrètes, où lesdites informations secrètes sont fournies audit serveur distant par un fournisseur secret (1) et
où chaque identifiant (InflDuser_i), stocké dans l'espace mémoire (101) dudit dispositif, est créé par le serveur distant et est unique pour chaque élément d'informations secrètes stocké dans le serveur distant, ledit identifiant (InflDuser_i étant envoyé audit dispositif par le fournisseur de secrets.
